Europäisches Patentamt

European Patent Office

Office européen des brevets

(19)

(11) **EP 0 770 653 A2**

(12) **EUROPÄISCHE PATENTANMELDUNG**

(43) Veröffentlichungstag:
02.05.1997 Patentblatt 1997/18

(51) Int. Cl.$^6$: **C09G 1/16**

(21) Anmeldenummer: 96117062.8

(22) Anmeldetag: 24.10.1996

(84) Benannte Vertragsstaaten:
BE DE ES GB IT NL

(30) Priorität: 26.10.1995 DE 19539940

(71) Anmelder: Wacker-Chemie GmbH
81737 München (DE)

(72) Erfinder:
• Sejpka, Johann, Dr.
84533 Marktl (DE)

• Wimmer, Franz
84489 Burghausen (DE)

(74) Vertreter: Deffner-Lehner, Maria, Dr. et al
Wacker-Chemie GmbH,
Zentralabteilung PLM,
Hanns-Seidel-Platz 4
81737 München (DE)

(54) **Fluorsiloxanhaltige Pflegemittel**

(57) Pflegemittel für harte Oberflächen, herstellbar unter Verwendung von bei Raumtemperatur festen, Fluorgruppen enthaltenden Organopolysiloxanen, die aufgrund von Temperaturänderungen reversibel ihre Aggregatzustände ändern können.

EP 0 770 653 A2

**Beschreibung**

Die Erfindung betrifft Fluororganopolysiloxane enthaltende, wäßrige Pflegemittel für harte Oberflächen.

Pflegemittel für harte Oberflächen, zum Beispiel für Automobilkarosserien, auf Basis von Fluororganopolysiloxanen sind bereits bekannt. Hierzu sei beispielsweise auf JP-A-04202389 verwiesen, in der ein Pflegemittel beschrieben wird, das erhalten wird, indem in Wasser ein fluoriertes Organopoylsiloxan, das synthetisiert wird, indem ein Hydroxylgruppen enthaltendes Methyltrifluorpropylsiloxan, das einen Fluorgehalt von 0,1 bis 26.5 Gew.% hat, mit einem Dimethylsiloxan, das mit einem Silikonalkoxid vernetzt ist, umgesetzt wird und ein Wachs oder eine wachsähnliche Substanz dispergiert werden. Bei dem fluorierten Organopolysiloxan handelt es sich um einen festen verzweigten Silikonkautschuk, dessen Aggregatzustand nicht mehr reversibel ist.

In JP-A-03227383 wird ein Pflegemittel beschrieben das Trimethylsilyl gestoppte Polymethyl(trifluorpropyl)siloxan und Wachse, wie Carnaubawachs 12, Hoechstwachs PE 1303 und MINK 5 und ein aliphatisches Lösungsmittel enthält. Bei dem fluorierten Organopolysiloxan handelt es sich um ein flüssiges Siloxan, das aufgrund seines Aggregatzustandes leicht auswaschbar bzw. re-emulgierbar ist.

In EP-A-0548789 werden Pflegemittel für harte Oberflächen beschrieben, die im wesentlichen kein organisches Lösungsmittel enthalten und unter Verwendung von bei Raumtemperatur festen Organopolysiloxanen hergestellt werden.

In DE-C-3635093 wird die Herstellung Fluor enthaltender Siloxane durch Umsetzung von Fluorgruppen enthaltenden Alkoholen mit Si-H enthaltenden Siloxanen beschrieben. Die so hergestellten Produkte haben jedoch den Nachteil, daß sie wegen der neugebildeten Si-O-C-Verknüpfung in wäßrigem System durch Hydrolyse zu Silanolen abreagieren, die dann durch Kondensation polymerisieren. Als weiteres Spaltprodukt wird der eingesetzte Fluorgruppen enthaltende Alkohol zurückerhalten. Des weiteren wird in dieser Schrift die Herstellung von Fluorgruppen enthaltenden Produkten durch Umsetzung von SiH-Komponenten mit entsprechenden Fluorgruppen enthaltenden Olefinen als Stand der Technik erwähnt.

Die bekannten fluorhaltigen Organopolysiloxane sind, wenn sie flüssig sind, durch Wasser wieder auswaschbar oder re-emulgierbar und wenn sie vernetzt sind, also in Form eines Silikonkautschukes vorliegen, können sie ihren Aggregatzustand nicht mehr ändern, so daß sie sich nur schwer aufbringen lassen, da sie durch die Reibungswärme, die beim Aufbringen entsteht, nicht wieder zu verflüssigen sind. Des weiteren enthalten sie teilweise organische Lösungsmittel, die aufgrund ihrer toxikologischen Eigenschaften und ihrer Brandgefahr unerwünscht sind.

Es bestand daher die Aufgabe, Pflegemittel auf Basis von Organopolysiloxanen bereitzustellen, die neben Lösungsmittel enthaltenden Pflegemittel auch solche bereitstellen, die im wesentlichen frei von organischen Lösungsmitteln sind und ihren Aggregatzustand reversibel ändern können sowie eine gute Hydrophobierung und gleichzeitig eine gute Oleophobierung zeigen.

Gegenstand der vorliegenden Erfindung sind Pflegemittel für harte Oberflächen, herstellbar unter Verwendung von bei Raumtemperatur festen Fluorgruppen enthaltenden Organopolysiloxanen, die aufgrund von Temperaturänderungen reversibel ihre Aggregatzustände ändern können.

Die reversible Änderung des Aggregatzustandes bedeutet bei der Erfindung, daß sich der feste Aggregatzustand in den flüssigen Aggregatzustand reversibel ändert und umgekehrt.

Die erfindungsgemäßen wäßrigen Pflegemittel enthalten vorzugsweise kein organisches Lösungsmittel. Sie können jedoch auch geringe Mengen, wie beispielsweise bis zu maximal 2 Gewichtsprozent, bezogen auf das Gesamtgewicht des Pflegemittels, organisches Lösungsmittel, wie etwa in der Funktion eines Konservierungsmittels, enthalten.

Als Raumtemperatur soll im Folgenden eine Temperatur von 20°C verstanden werden.

Bei den erfindungsgemäß eingesetzten, bei Raumtemperatur festen Fluorgruppen enthaltenden Organopolysiloxanen handelt es sich vorzugsweise um solche mit Einheiten der Formel

$$R_a R^1_b SiO_{(4-a-b)/2} \qquad\qquad (I),$$

wobei

R gleich oder verschieden sein kann und einwertige Kohlenwasserstoffreste oder Fluorgruppen enthaltende Kohlenwasserstoffreste bedeutet,

$R^1$ gleich oder verschieden sein kann, Fluorgruppen enthaltender Kohlenwasserstoffrest bedeutet,

a 0, 1, 2 oder 3, durchschnittlich 0,75 bis 1,5, durchschnittlich vorzugsweise 0,9 bis 1,1 und

b 0, 1, 2 oder 3, durchschnittlich 0,0 bis 1,1, durchschnittlich vorzugsweise 0,01 bis 0,07 ist, mit der Maßgabe, daß die Summe aus a+b kleiner oder gleich 3 ist und im gesamten Molekül zumindest eine Einheit vorhanden ist, die einen Fluorgruppen enthaltenden Kohlenwasserstoffrest aufweist.

Besonders bevorzugt sind bei Raumtemperatur feste Fluorgruppen enthaltenden, lineare Organopolysiloxane der Formel

$$R_3SiO(SiR_2O)_x[(SiRR^1O)_r(SiRR^2O)_s]_ySiR_3 \qquad \text{(II)},$$

wobei

R und $R^1$ die oben dafür angegeben Bedeutung haben und

$R^2$ gleich oder verschieden sein kann und einwertige Kohlenwasserstoffreste bedeutet und

r eine ganze Zahl im Wert von 0 bis 100, bevorzugt im Wert von 0,1 bis 20, besonders bevorzugt im Wert von 0,5 bis 10 ist,

s eine ganze Zahl im Wert von 0 bis 179, bevorzugt im Wert von 10 bis 120, besonders bevorzugt im Wert von 40 bis 90 ist,

x eine ganze Zahl im Wert von 0 bis 300, bevorzugt im Wert von 10 bis 180, besonders bevorzugt im Wert von 20 bis 80 ist,

y eine ganze Zahl im Wert von 1 bis 180, bevorzugt im Wert von 5 bis 120, besonders bevorzugt im Wert von 10 bis 80 ist,

und die Summe aus x+y 0-300, bevorzugt 200 und besonders bevorzugt 100 beträgt,

mit der Maßgabe, daß mindestens ein Rest R in Formel (II) die Bedeutung von Kohlenwasserstoffrest mit mindestens 18 Kohlenstoffatomen hat, und im Fall x+y=0 mindestens ein Rest R die Bedeutung von $R^1$ hat.

Bei dem Rest R handelt es sich bevorzugt um Kohlenwasserstoffreste mit 1 bis 24 Kohlenstoffatom(en).

Beispiele für Reste R sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest, n-Eicosylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Besonders bevorzugt handelt es sich bei R um den Methylrest und den n-Octadecylrest.

Beispiele für mit Fluorgruppen substituierte Reste R sind vorzugsweise die für $R^1$ angegebenen Substituenten.

Bei Rest $R^1$ handelt es sich bevorzugt um einen Alkylen-$R_F$-Rest, wobei es sich bei dem Alkylenrest vorzugsweise um den Ethylen- oder Propylenrest handelt.

$R_F$ steht für einen linearen oder verzweigten, perfluorierten Rest mit vorzugsweise 1 bis 12 Kohlenstoffatomen.

Beispiele für den Rest $R_F$ sind vorzugsweise:

Trifluormethyl-, Perfluorhexyl-Rest, usw.

Bei Rest $R^2$ handelt es sich vorzugsweise um Kohlenwasserstoffreste mit 1 bis 18 Kohlenstoffatom(en), wobei der Methylrest besonders bevorzugt ist.

Beispiele für Reste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der $\beta$-Phenylethylrest.

Obwohl in obiger Formel nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R_3SiO_{1/2}$-, $RSiO_{3/2}$-, $SiO_{4/2}$-Einheiten, ersetzt sein, wobei R die vorstehend dafür angegebene Bedeutung hat.

Die Herstellung der erfindungsgemäß eingesetzten, bei Raumtemperatur festen Organopolysiloxane erfolgt analog zu den z.B. in GB 6 85 173 A (ausgegeben am 31. Dezember 1951, Dow Corning Ltd.), US 2,842,521 (ausgegeben am 8. Juli 1958, Wacker-Chemie GmbH), FR 14 75 709 A (ausgegeben am 7. April 1967, General Electric Company), US 3,668,180 (ausgegeben am 6. Juni 1972, Stauffer-Wacker-Silicone Corporation), US 3,792,071 (ausgegeben am 12. Februar 1974, Wacker-Chemie GmbH), US 3,846,358 (ausgegeben am 5. November 1974, General Electric Company), und US 4,298,753 (ausgegeben 3. November 1981, Wacker-Chemie GmbH) beschrieben Verfahren. Bei den dort beschriebenen Verfahren wird in Analogie vorzugsweise die Fluorgruppen enthaltende Komponente im 1. Schritt und im 2. Schritt das ungesättigte Olefin an das H-Siloxan addiert.

Vorzugsweise wird das erfindungsgemäße Fluorgruppen enthaltende Polysiloxan hergestellt, indem ein H-Siloxan mit Einheiten der allgemeinen Formel verwendet wird,

$$H_aSiR_b^3O_{\frac{4-a-b}{2}} , \qquad \text{(III)}$$

in der $R^3$ gleiche oder verschiedene einwertige, gegebenenfalls halogensubstituierte $C_1$-$C_{15}$-Kohlenwasserstoff- oder Kohlenwasserstoffoxyreste oder Hydroxylgruppen, **a** 0, 1, 2 oder 3, durchschnittlich 0,01 bis 1,2, insbesondere 0,1 bis 1 und **b** 0, 1, 2 oder 3, durchschnittlich 1,0 bis 2,0, insbesondere 1,4 bis 1,8 bedeutet, mit der Maßgabe, daß pro Molekül mindestens ein Si-gebundenes Wasserstoffatom vorhanden ist.

Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für halogensubstituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Besonders bevorzugt sind die nicht substituierten $C_1$-$C_6$-Alkylreste, insbesondere der Methylrest und der Phenylrest.

Beispiele für die $C_1$-$C_{15}$-Kohlenwasserstoffoxyreste sind die vorstehenden $C_1$-$C_{15}$-Kohlenwasserstoffreste, die über ein zweiwertiges Sauerstoffatom an das Siliciumatom gebunden sind. Vorzugsweise sind höchstens 5 %, insbesondere keine der Reste $R^3$, Kohlenwasserstoffoxyreste oder Hydroxylgruppen. Ein besonders bevorzugtes H-Siloxan ist Methylhydrogenpolysiloxan, das Trimethylsilyl terminiert ist.

Vorzugsweise weisen die H-Siloxane eine Viskosität von höchstens 300 $mm^2$/s, bevorzugt von 5 bis 100 $mm^2$/s, besonders bevorzugt von 15-25 $mm^2$/s bei 25°C auf. Lineare H-Siloxane sind bevorzugt. Der Wasserstoffgehalt beträgt vorzugsweise 0,05 bis 5,0 Gew.-%.

Das H-Siloxan wird vorzugsweise in Mengen von 5 bis 25 Gew.%, bevorzugt in Mengen von 10 bis 20 Gew.% und besonders bevorzugt in Mengen von 15 bis 18 Gew.% eingesetzt. Das H-Siloxan wird unter inerter Begasung, vorzugsweise unter Stickstoffbegasung in einem organischen Lösungsmittel, wie vorzugsweise Toluol oder Xylol auf eine Temperatur von 80 bis 120 °C erwärmt.

Zu dieser Mischung wird ein Fluorgruppen enthaltendes Olefin wie z.B. Trifluorpropen, Perfluorhexylethylen, Tetrafluorethylallylether hinzugefügt, wobei Perfluorhexylethylen besonders bevorzugt ist.

Das Fluorgruppen enthaltende Olefin wird vorzugsweise in Mengen von 0,1 bis 80 Gew.%, bevorzugt in Mengen von 1 bis 60 Gew.% und besonders bevorzugt in Mengen von 5 bis 40 Gew.% verwendet.

Es wird auch ein bekannter Platinkatalysator hinzugefügt. Es werden Platinmetalle und/oder deren Verbindungen eingesetzt, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6.6H_2O$, $Na_2PtCl_4 . 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 . 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der in den Massen vorliegenden H-Siloxane, eingesetzt.

Das Fluorgruppen enthaltende Olefin und der Platinkatalysator werden in einer Zeit von vorzugsweise 30 min zugegeben und vorzugsweise eine Zeit von 2 h bei einer Temperatur von vorzugsweise 120 °C gerührt.

In einem zweiten Schritt wird dann zu dieser Mischung ein Alkylen, wie zum Beispiel n-Octadecen und n-Eicosen hinzugefügt. Dieses Alkylen wird vorzugsweise in Mengen von 10 bis 80 Gew.%, bevorzugt in Mengen von 20 bis 70 Gew.% und besonders bevorzugt in Mengen von 30 bis 60 Gew.% eingesetzt.

Diese Mischung wird vorzugsweise in einer Zeit von 30 min bis 120 min hinzugefügt und dann vorzugsweise bei einer Temperatur von 100 bis 140 °C über eine Zeit von vorzugsweise 30 min bis 120 min gerührt. Am Schluß wird noch ein Alkylen mit 6 bis 10 Kohlenstoffatomen, vorzugsweise n-Octen vorzugsweise in Mengen von 0 bis 20 Gew.%, bevorzugt in Mengen von 1 bis 15 Gew.% und besonders bevorzugt in Mengen von 5 bis 10 Gew.% hinzugefügt und 30 bis 120 min bei einer Temperatur von vorzugsweise 100 bis 140 °C gerührt. Am Schluß wird die Mischung bei einer Temperatur von vorzugweise 120 bis 150 ausdestilliert, wobei das Endprodukt in einer Menge von 85 bis 99 Gew.% der errechneten theoretischen Ausbeute erhalten wird.

Bevorzugt handelt es sich bei den bei Raumtemperatur festen Organopolysiloxanen aus Einheiten der Formel (I) um Organopolysiloxane aus $(RSiO_{3/2})$-Einheiten und Organopolysiloxane aus $(R_3SiO_{1/2})$- und $(SiO_{4/2})$-Einheiten mit R gleich der obengenannten Bedeutung.

Bei vorzugsweise 10 bis 50 Prozent, besonders bevorzugt 25 bis 50 Prozent, insbesondere 35 bis 50 Prozent, der Anzahl der Reste R im Organopolysiloxan der Formel (II) handelt es sich um Kohlenwasserstoffreste mit mindestens 18 Kohlenstoffatomen. Wegen der leichteren Zugänglichkeit handelt es sich bei den übrigen Resten bevorzugt um Methylreste.

Beispiele für die erfindungsgemäß eingesetzten, bei Raumtemperatur festen Organopolysiloxane der Formel (II) sind $Me_3SiO[MeSi(n-C_{18}H_{37})O]_m[MeSi(CH_2CH_2(CF_2)_5CF_3)O]_nSiMe_3$, wobei m eine ganze Zahl von 10 bis 150, bevorzugt von 20 bis 120, besonders bevorzugt von 40 bis 90 und n eine ganze Zahl von 0 bis 30, bevorzugt von 0 bis 20, besonders bevorzugt von 1 bis 12 sein kann, wobei ein Verhältnis von m zu n von 30:1 bis 1:1 bevorzugt und ein Verhältnis von 19:1 bis 4:1 besonders bevorzugt ist.

Bevorzugt handelt es sich bei Fluorgruppen enthaltenden, bei Raumtemperatur festen Organopolysiloxanen der Formel (II) um

B: $Me_3SiO[MeSi(n-C_{18}H_{37})O]_{57}[MeSi(CH_2CH_2(CF_2)_5CF_3)O]_3SiMe_3$
C: $Me_3SiO[MeSi(n-C_{18}H_{37})O]_{54}[MeSi(CH_2CH_2(CF_2)_5CF_3)O]_6SiMe_3$
D: $Me_3SiO[MeSi(n-C_{18}H_{37})O]_{48}[MeSi(CH_2CH_2(CF_2)_5CF_3)O]_{12}SiMe_3$

Die erfindungsgemäß eingesetzten, Fluorgruppen enthaltenden, bei Raumtemperatur festen Organopolysiloxane der Formel (II) haben ein Molekulargewicht von vorzugsweise mindestens 1 000, besonders bevorzugt von 10 000 bis 30 000.

Die erfindungsgemäß eingesetzten, Fluorgruppen enthaltenden, bei Raumtemperatur festen Organopolysiloxane der Formel (II) haben vorzugsweise eine wachsartige Konsistenz und einen Schmelzpunkt zwischen 25 und 60°C.

Die erfindungsgemäßen Pflegemittel werden besonders bevorzugt unter Verwendung von bei Raumtemperatur festen Organopolysiloxanen aus Einheiten der Formel (I) oder bei Raumtemperatur festen Organopolysiloxanen der Formel (II) oder deren Gemischen hergestellt.

Zur Herstellung der erfindungsgemäßen Pflegemittel wird bei Raumtemperatur festes, Fluorgruppen enthaltendes Organopolysiloxan in Mengen von vorzugsweise 0,1 bis 5,0 Gewichtsprozent, besonders bevorzugt von 0,5 bis 2,0 Gewichtsprozent, jeweils bezogen auf das Gesamtgewicht an dem erfindungsgemäßen Pflegemittel, eingesetzt.

Vorzugsweise werden zur Herstellung der erfindungsgemäßen Pflegemittel die bei Raumtemperatur festen Organopolysiloxane in Form einer wäßrigen Emulsion eingesetzt.

Falls zur Herstellung der erfindungsgemäßen Pflegemittel Fluorgruppen enthaltendes, bei Raumtemperatur festes Organopolysiloxan aus Einheiten der Formel (I) eingesetzt wird, wird die Emulsion vorzugsweise zubereitet, indem das bei Raumtemperatur feste, Fluorgruppen enthaltende Organopolysiloxan aus Einheiten der Formel (I) mit einem Emulgator in Wasser emulgiert wird.

Das Emulgieren des bei Raumtemperatur festen, Fluorgruppen enthaltenden Organopolysiloxans kann in üblichen, zur Herstellung von Emulsionen geeigneten Mischgeräten erfolgen.

Bei der Herstellung der erfindungsgemäß eingesetzten, wäßrigen Emulsionen von bei Raumtemperatur festen, Fluorgruppen enthaltenden Organopolysiloxanen können als Emulgatoren alle bisher bekannten, ionischen und nichtionischen Emulgatoren sowohl einzeln, als auch in Mischungen verschiedener Emulgatoren eingesetzt werden, mit denen auch bisher beständige wäßrige Emulsionen von Organopolysiloxanen hergestellt werden konnten. Es können auch solche Emulgiermittel, wie sie in DE 36 13 384 C bzw. in der entsprechenden US-Anmeldung mit der Seriennummer USSN 19 988 beschrieben sind, eingesetzt werden. Vorzugsweise werden nicht-ionische und kationaktive Emulgatoren eingesetzt. Besonders bevorzugt werden dabei Fettalkoholpolyglycolether, Nonylphenolpolyglycolether, Tri-n-butylphenolpolyglycolether und quarternäre Ammoniumsalze von gesättigten und ungesättigten Fettsäuren eingesetzt.

Die erfindungsgemäß eingesetzten, wäßrigen Emulsionen von bei Raumtemperatur festen, Fluorgruppen enthaltenden Organopolysiloxanen enthalten Emulgator in Mengen von vorzugsweise 2 bis 8 Gew.-%, besonders bevorzugt 3 bis 5 Gew.-%, jeweils bezogen auf das Gesamtgewicht an eingesetztem, bei Raumtemperatur festem Organopolysiloxan.

Die erfindungsgemäß eingesetzten, wäßrigen Emulsionen von bei Raumtemperatur festen, Fluorgruppen enthaltenden Organopolysiloxanen besitzen einen Festgehalt von vorzugsweise 10 bis 60 Gew.-%, insbesondere 15 bis 42 Gew.-%, jeweils bezogen auf das Gesamtgewicht der Emulsion.

Die zum Schmelzen notwendige Temperatur hängt von dem eingesetzten Organopolysiloxan ab und liegt vorzugsweise zwischen 20 und 60°C, besonders bevorzugt zwischen 40 und 50°C.

Das Emulgieren der Schmelze wird nach in der Silicium-Chemie üblichen Verfahren durchgeführt.

Die erfindungsgemäßen bei Raumtemperatur festen, Fluorgruppen enthaltenden Organopolysiloxane können auch in organischen Lösungsmitteln gelöst werden und gegebenenfalls unter Zugabe von geeigneten Zusatzstoffen, die später beispielhaft aufgeführt werden, als Pflegemittel verwendet werden. Organische Lösungsmittel sind vorzugsweise Petroleumbenzine. Es werden Lösungen mit einem Gehalt von vorzugsweise 0,1 bis 20 Gew%, bevorzugt von 0,1 bis 10 Gew.% und besonders bevorzugt von 0,1 bis 5 Gew.% an festem, Fluorgruppen enthaltenden Organopolysiloxan hergestellt.

Das erfindungsgemäße Pflegemittel kann je nach Einsatzzweck Zusatzstoffe, wie beispielsweise nicht siliciumhaltige Wachse, Verdickungsmittel, Schleifmittel, Konservierungsmittel und Additive sowie ggf. weitere Silicone bzw. deren Emulsionen enthalten.

Beispiele für nicht siliciumhaltige Wachse sind natürliche Wachse pflanzlichen Ursprungs, wie Carnaubawachs und Candelillawachs, Montansäure- und Montanesterwachse, anoxidierte synthetische Paraffine, Polyethylenwachse, Polyvinyletherwachse und metallseifenhaltiges Wachs, wobei Carnaubawachs, Paraffinwachse und Polyethylenwachse bevorzugt und Paraffinwachse besonders bevorzugt sind.

Falls zur Herstellung des erfindungsgemäßen Pflegemittels Wachse eingesetzt werden, werden sie vorzugsweise in Mengen von 0,1 bis 5,0 Gewichtsprozent, besonders bevorzugt 0,1 bis 1,0 Gewichtsprozent, jeweils bezogen auf das Gesamtgewicht des Pflegemittels, eingesetzt.

Beispiele für Verdickungsmittel sind Homopolysaccharide, Heteropolysaccharide, Polyacrylate, Carboxy- und Hydroxymethylcellulose, wobei Polysaccharide und Polyacrylate bevorzugt und Polysaccharide besonders bevorzugt sind.

Falls zur Herstellung des erfindungsgemäßen Pflegemittels Verdickungsmittel eingesetzt werden, werden sie vorzugsweise in Mengen von 0,1 bis 1,5 Gewichtsprozent, besonders bevorzugt 0,3 bis 0,6 Gewichtsprozent, jeweils bezogen auf das Gesamtgewicht des Pflegemittels, eingesetzt.

Beispiele für Schleifmittel sind Poliertonerde, sog. Kieselkreide, pyrogene Kieselsäure und natürliche Kieselgur, wie beispielsweise "Snow Floss" der Fa. Lehmann & Foss, wobei Kieselkreide und Poliertonerde besonders bevorzugt sind.

Falls zur Herstellung des erfindungsgemäßen Pflegemittels Schleifmittel eingesetzt werden, werden sie vorzugsweise in Mengen von 1 bis 10 Gewichtsprozent, besonders bevorzugt 3 bis 5 Gewichtsprozent, jeweils bezogen auf das Gesamtgewicht des Pflegemittels, eingesetzt.

Beispiele für Konservierungsmittel sind Formaldehyd, Parabene, Benzylalkohol, Salicylsäure und deren Salze, Benzoesäure und deren Salze sowie Isothiazolinone, wobei Formaldehyd und Isothiazolinone bevorzugt und Formaldehyd besonders bevorzugt sind.

Falls zur Herstellung des erfindungsgemäßen Pflegemittels Konservierungsmittel eingesetzt werden, werden sie vorzugsweise in Mengen von 0,01 bis 0,30 Gewichtsprozent, besonders bevorzugt 0,05 bis 0,10 Gewichtsprozent, jeweils bezogen auf das Gesamtgewicht des Pflegemittels, eingesetzt.

Beispiele für Additive sind Duftstoffe und Farbstoffe.

Falls zur Herstellung des erfindungsgemäßen Pflegemittels Additive eingesetzt werden, werden sie vorzugsweise in Mengen von 0,01 bis 0,50 Gewichtsprozent, besonders bevorzugt 0,05 bis 0,50 Gewichtsprozent, jeweils bezogen auf das Gesamtgewicht des Pflegemittels, eingesetzt.

Von jeder der vorstehend als mögliche Komponente für die erfindungsgemäßen wäßrigen Pflegemittel genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen Pflegemittel enthalten Wasser vorzugsweise in Mengen von 85 bis 99,9 Gewichtsprozent, besonders bevorzugt 93 bis 99,5 Gewichtsprozent, jeweils bezogen auf das Gesamtgewicht des Pflegemittels, wobei es sich vorzugsweise um entmineralisiertes Wasser handelt.

Die einzelnen Komponenten des erfindungsgemäßen Pflegemittels können auf beliebige Art und Weise miteinander vermischt werden. So können zum Beispiel die Zusatzstoffe dem bei Raumtemperatur festen Organopolysiloxan vor dem Emulgierschritt zugemischt werden. Die Zusatzstoffe können jedoch auch mit den fertigen Emulsionen von bei Raumtemperatur festen Organopolysiloxanen und gegebenenfalls von bei Raumtempertaur flüssigen Organopolysiloxanen vermischt werden, was bevorzugt ist.

Das Emulgieren bzw. das Vermischen der zur Herstellung der erfindungsgemäßen Pflegemittel einsetzbaren Komponenten wird vorzugsweise bei einer Temperatur von 20 bis 50°C und einem Druck der umgebenden Atmosphäre, also zwischen 900 und 1100 hPa, durchgeführt. Es können aber auch höhere oder niedrigere Temperaturen sowie höhere oder niedrigere Drucke angewendet werden. Der Emulgierschritt kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, erfolgen.

Die erfindungsgemäßen Poliermittel haben bei Raumtemperatur eine Konsistenz von dünnflüssig bis cremig pastös.

Die erfindungsgemäßen Poliermittel haben eine gute Emulsionsstabilität von mindestens zwei Jahren bei einer sachgemäßen Lagerung bei Raumtemperatur.

Ein weiterer Gegenstand der vorliegenden Erfindung ist ein Verfahren zur pflegenden Behandlung von harten Oberflächen, dadurch gekennzeichnet, daß das erfindungsgemäße Pflegemittel auf die harte Oberfläche aufgebracht wird.

Bei dem erfindungsgemäßen Verfahren wird das erfindungsgemäße Pflegemittel durch Sprühen, Tauchen oder mit einem Hilfsmittel, wie Watte, Textilien und Schwamm, aufgetragen und verrieben. Das erfindungsgemäße Pflegemittel hat den Vorteil, daß es sich leicht auftragen und gut verreiben läßt.

Bei den zu behandelnden harten Oberflächen handelt es sich insbesondere um metallische Oberflächen, lackierte Oberflächen und Kunststoffoberflächen. Ausgezeichnet eignet sich das erfindungsgemäße Pflegemittel zur Behandlung von Automobilkarosserien.

Die erfindungsgemäßen Pflegemittel haben den Vorteil, daß sie kein organisches Lösungsmittel bzw. organisches Lösungsmittel nur in äußerst geringen Mengen, zum Beispiel als Konservierer enthalten.

Des weiteren haben sie den Vorteil, daß mit den erfindungsgemäßen Pflegemitteln eine ausgezeichnete Witterungs- und Waschbeständigkeit erzielt wird. Um diesen Effekt zu erreichen, genügen bereits niedrige Einsatzmengen an bei Raumtemperatur festen Organopolysiloxanen zur Herstellung der erfindungsgemäßen Pflegemittel.

Zusätzlich haben die erfindungsgemäßen Pflegemittel den Vorteil, daß sie eine ausgezeichnete Beständigkeit gegen Öle, Fette und Lösungsmittel haben. Dies ist besonders wichtig bei Oberflächen, die einer starken Verschmutzung durch öligen Ruß z.B. aus Verbrennungsmotoren oder einem direkten Kontakt mit Lösungsmitteln, z.B. am Tankeinfüllstutzen von Kraftfahrzeugen ausgesetzt sind.

Darüber hinaus haben die erfindungsgemäßen Pflegemittel den Vorteil, daß sie nicht entflammbar (falls auf wässriger Basis) sind, leicht anwendbar sind und den behandelten festen Oberflächen hohe Farbtiefe und Glanz verleihen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25° C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Randwinkelmessungen werden wie folgt durchgeführt: Auf die zu testende Oberfläche wird aus einer Höhe von 15 mm ein Wassertropfen mit einem Volumen von 0,01 ml aufgebracht und mit Hilfe eines Goniometers (Typ 100-10 der Fa. Rame-Hart Inc., New Jersey, USA) der Randwinkel bestimmt. Die Messung wird 4 mal wiederholt und aus den 5 Messungen der Mittelwert gebildet. Als Blindwert wird im Folgenden die Randwinkelmessung auf dem nicht mit dem erfindungsgemäßen Pflegemittel behandelten Substrat bezeichnet.

Es werden die folgenden Abkürzungen verwendet:

Me: Methylrest
Et: Ethylrest.

Verwendete Wachse:

A: $Me_3SiO[MeSi(n\text{-}C_{18}H_{37})O]_{60}\text{-}SiMe_3$
B: $Me_3SiO[MeSi(n\text{-}C_{18}H_{37})O]_{57}[MeSi(CH_2CH_2(CF_2)_5CF_3)O]_3SiMe_3$
C: $Me_3SiO[MeSi(n\text{-}C_{18}H_{37})O]_{54}[MeSi(CH_2CH_2(CF_2)_5CF_3)O]_6SiMe_3$
D: $Me_3SiO[MeSi(n\text{-}C_{18}H_{37})O]_{48}[MeSi(CH_2CH_2(CF_2)_5CF_3)O]_{12}SiMe_3$

Beispiel 1: Benzinische Formulierung

Testung der Hydrophobierung:
Die Wachse A - D werden 2%ig in Petroleumbenzin 100/140° (käuflich erhältlich bei der Fa. Merck) gelöst und mit Watte auf lackierte Bleche einer Kraftfahrzeugkarosserie mit einem Kontaktwinkel von 66° gegenüber Wasser aufgetragen und verrieben. Nach 15 Minuten Stehenlassen bei Raumtemperatur werden die Randwinkel der behandelten Oberflächen gegenüber Wasser gemessen und anschließend werden die Substrate bei Raumtemperatur 4 mal 15 Minuten mit jeweils 10 l pro 100 $cm^2$ Oberfläche mit Leitungswasser einer Temperatur von ca. 6°C aus einem Abstand von 20 cm beregnet. Das Ergebnis der Randwinkelmessungen befindet sich in Tabelle 1.

Tabelle 1

| Dauer der Bereg-nung [min] | Wachs A (Randwin-kel) | Wachs B (Randwin-kel) | Wachs C (Randwin-kel) | Wachs D (Randwin-kel) |
|---|---|---|---|---|
| 0 | 101 | 102 | 104 | 105 |
| 15 | 102 | 102 | 105 | 106 |
| 30 | 100 | 100 | 104 | 106 |
| 45 | 98 | 98 | 102 | 106 |
| 60 | 97 | 98 | 102 | 105 |

Testung der Oleophobierung:
Die Wachse A - D werden 2%ig in Petroleumbenzin 100/140° (käuflich erhältlich bei der Fa. Merck) gelöst und mit Watte auf lackierte Bleche einer Kraftfahrzeugkarosserie mit einem Kontaktwinkel von 20° gegenüber Paraffinöl aufgetragen und verrieben. Nach 15 Minuten Stehenlassen bei Raumtemperatur werden die Randwinkel der behandelten Oberflächen gegenüber Paraffinöl gemessen. Die Ergebnisse sind in Tabelle 2 aufgelistet:

Tabelle 2

| Wachs A (Randwinkel) | Wachs B (Randwinkel) | Wachs C (Randwinkel) | Wachs D (Randwinkel) |
|---|---|---|---|
| 45 | 51 | 53 | 48 |

Den besten Kompromiß zwischen Substrathaftung und Hydrophobierung bzw. Oleophobierung zeigt das Wachs C.

Beispiel 2: Wässerige Formulierung

Anwendungsfertige Formulierungen:
0,3 g Polyacrylsäuren (käuflich erhältlich unter der Bezeichnung Carbopol bei der Fa. Goodrich, Neuss) werden unter Rühren in 96,4 g entionisiertem Wasser dispergiert und anschließend 2,0 g der unter A beschriebenen Emulsion, 1,0 g der unter B beschriebenen Emulsion, 0,2 g Triethanolamin und 0,1 g Formalin-Lösung (40 %ig) zugegeben.
Das so erhaltene Hydrophobierungs- und Oleophobierungsmittel wird mit Watte auf das Blech einer Kraftfahrzeugkarosserie mit einem Kontaktwinkel von 66° gegenüber Wasser und einem Kontaktwinkel von 20° gegenüber Paraffinöl aufgetragen und verrieben. Nach 15 Minuten Stehenlassen bei Raumtemperatur werden die Randwinkel gegenüber Wasser und Paraffinöl gemessen und anschließend werden die Bleche bei Raumtemperatur 4 mal 15 Minuten mit jeweils 10 l pro 100 cm$^2$ Oberfläche mit Leitungswasser einer Temperatur von ca. 6°C aus einem Abstand von 20 cm beregnet. Das Ergebnis der Randwinkelmessungen gegenüber Wasser und Paraffinöl befindet sich in Tabelle 3.

A)
Zu 175 g Organopolysiloxan der Formel $Me_3SiO[MeSi(n-C_{18}H_{37})O]_{54}[MeSi(CH_2CH_2(CF_2)_5CF_3)O]_6SiMe_3$ werden 25g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergerätes emulgiert, indem unter ständigem Rühren 300 g entionisiertes Wasser zugegeben werden. Es wird eine wäßrige Emulsion von bei Raumtemperatur festen fluorhaltigem Organopolysiloxan mit einem Festgehalt von 38 Gewichtsprozent, bezogen auf das Gesamtgewicht an Emulsion, erhalten.

B)
Zu 175 g mit Trimethylsiloxy-Einheiten terminiertem Dimethylpolysiloxan mit einer Viskosität von 350 mm$^2$/s (käuflich erhältlich unter der Bezeichnung "AK 350" bei der Wacker-Chemie GmbH, München) werden 15 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergerätes emulgiert, indem unter ständigem Rühren 310 g entionisiertes Wasser zugegeben werden. Es wird eine wäßrige Emulsion von bei Raumtemperatur flüssigen Dimethyl-Polysiloxan mit einem Festgehalt von 37 Gewichtsprozent, bezogen auf das Gesamtgewicht an Emulsion, erhalten.

Tabelle 3

| Dauer der Beregung [min] | Randwinkel gegenüber Wasser | Randwinkel gegenüber Paraffinöl |
|---|---|---|
| 0 | 106 | 35 |
| 15 | 102 | 51* |
| 30 | 102 | 51* |
| 45 | 101 | 52* |
| 60 | 100 | 52* |

\* Bei RT flüssige Komponenten wie das in B verwendete Dimethylpolysiloxan zeigen gute Verträglichkeit mit Paraffin, so daß die oleophobe Wirkung der beanspruchten Formulierung erst dann voll zur Geltung kommt, wenn diese bei RT flüssigen Komponenten ausgewaschen sind.

**Patentansprüche**

1. Pflegemittel für harte Oberflächen, herstellbar unter Verwendung von bei Raumtemperatur festen, Fluorgruppen enthaltenden Organopolysiloxanen, die aufgrund von Temperaturänderungen reversibel ihre Aggregatzustände ändern können.

2. Pflegemittel nach Anspruch 1, dadurch gekennzeichnet, daß es sich bei den bei Raumtemperatur festen, Fluorgruppen enthaltenden Organopolysiloxanen um solche mit Einheiten der Formel

$$R_aR^1_bSiO_{(4-a-b)/2} \qquad (I),$$

wobei

R gleich oder verschieden sein kann und einwertige Kohlenwasserstoffreste und/oder Fluorgruppen enthaltende Kohlenwasserstoffreste bedeutet,
$R^1$ gleich oder verschieden sein kann, Fluorgruppen enthaltender Kohlenwasserstoffrest bedeutet,
a 0, 1, 2 oder 3, durchschnittlich 0,75 bis 1,5, und
b 0, 1, 2 oder 3, durchschnittlich 0,0 bis 1,1, ist, mit der Maßgabe, daß die Summe aus a+b kleiner oder gleich 3 ist und im gesamten Molekül zumindest eine Einheit vorhanden ist, die einen Fluorgruppen enthaltenden Kohlenwasserstoffrest aufweist, handelt.

3. Pflegemittel nach Anspruch 1, dadurch gekennzeichnet, daß es sich bei den bei Raumtemperatur festen, Fluorgruppen enthaltenden Organopolysiloxanen um bei Raumtemperatur feste, lineare Organopolysiloxane der Formel

$$R_3SiO(SiR_2O)_x[(SiRR^1O)_r(SiRR^2O)_s]_ySiR_3 \qquad (II),$$

wobei

R und $R^1$ die oben dafür angegeben Bedeutung haben und
$R^2$ gleich oder verschieden sein kann und einwertige Kohlenwasserstoffreste bedeutet und
r eine ganze Zahl im Wert von 0 bis 100 ist,
s eine ganze Zahl im Wert von 0 bis 179 ist,
x eine ganze Zahl im Wert von 0 bis 300 ist,
y eine ganze Zahl im Wert von 1 bis 180 ist ,

und die Summe aus x+y 0-300 beträgt, mit der Maßgabe, daß mindestens ein Rest R in Formel (II) die Bedeutung von Kohlenwasserstoffrest mit mindestens 18 Kohlenstoffatomen hat, und im Fall x+y=0 mindestens ein Rest R die Bedeutung von $R^1$ hat, handelt.

4.  Pflegemittel nach einem oder mehreren der Ansprüche 1 bis 3, dadurch gekennzeichnet, daß zur Herstellung des Pflegemittels bei Raumtemperatur festes, Fluorgruppen enthaltendes Organopolysiloxan in Mengen von 0,1 bis 5,0 Gewichtsprozent, bezogen auf das Gesamtgewicht des Pflegemittels, eingesetzt wird.

5.  Pflegemittel nach einem oder mehreren der Ansprüche 1 bis 4, dadurch gekennzeichnet, daß das bei Raumtemperatur feste Fluorgruppen enthaltende Organopolysiloxan in Form einer wäßrigen Emulsion verwendet wird.

6.  Pflegemittel nach einem oder mehreren der Ansprüche 1 bis 4, dadurch gekennzeichnet, daß das bei Raumtemperatur feste, Fluorgruppen enthaltende Organopolysiloxan in Form einer Lösungsmittel enthaltenden Zubereitung verwendet wird.

7.  Pflegemittel nach einem oder mehreren der Ansprüche 1 bis 6, dadurch gekennzeichnet, daß zur Herstellung des Pflegemittels Zusatzstoffe, ausgewählt aus der Gruppe bestehend aus nicht siliciumhaltigen Wachsen, Verdickungsmitteln, Schleifmitteln, Konservierungsmitteln und Additiven, wie Duftstoffe und Farbstoffe sowie gegebenenfalls weitere Silicone bzw. deren Emulsionen verwendet werden.

8.  Pflegemittel nach einem oder mehreren der Ansprüche 1 bis 5 und 7, dadurch gekennzeichnet, daß sie Wasser in Mengen von 85 bis 99,9 Gewichtsprozent, bezogen auf das Gesamtgewicht des Pflegemittels, enthalten.

9.  Pflegemittel nach einem oder mehreren der Ansprüche 1 bis 5 und 7 bis 8, dadurch gekennzeichnet, daß sie kein organisches Lösungsmittel enthalten.

10. Verfahren zur pflegenden Behandlung von harten Oberflächen, dadurch gekennzeichnet, daß Pflegemittel gemäß einem oder mehreren der Ansprüche 1 bis 9 auf die harte Oberfläche aufgebracht wird.

11. Verfahren nach Anspruch 10, dadurch gekennzeichnet, daß es sich bei den harten Oberflächen um solche, ausgewählt aus der Gruppe bestehend aus metallischen Oberflächen, lackierten Oberflächen und Kunststoffoberflächen handelt.